(19) Europäisches Patentamt / European Patent Office / Office européen des brevets

(11) **EP 3 236 518 B1**

(12) **EUROPEAN PATENT SPECIFICATION**

(45) Date of publication and mention
of the grant of the patent:
**28.08.2019 Bulletin 2019/35**

(21) Application number: **14908421.2**

(22) Date of filing: **17.12.2014**

(51) Int Cl.:
*H01M 4/38* (2006.01)        *C22C 1/04* (2006.01)
*C22C 1/10* (2006.01)        *C22C 29/18* (2006.01)
*H01M 10/052* (2010.01)      *H01M 4/02* (2006.01)
*B22F 9/00* (2006.01)        *B22F 9/04* (2006.01)

(86) International application number:
**PCT/JP2014/083477**

(87) International publication number:
**WO 2016/098211 (23.06.2016 Gazette 2016/25)**

(54) **NEGATIVE-ELECTRODE ACTIVE MATERIAL FOR LITHIUM ION SECONDARY BATTERY, AND LITHIUM ION SECONDARY BATTERY USING SAME**

NEGATIVELEKTRODEN-AKTIVMATERIAL FÜR LITHIUM-IONEN-SEKUNDÄRBATTERIE UND
LITHIUM-IONEN-SEKUNDÄRBATTERIE DAMIT

MATÉRIAU ACTIF D'ÉLECTRODE NÉGATIVE POUR BATTERIE SECONDAIRE LITHIUM-ION ET
BATTERIE SECONDAIRE LITHIUM-ION L'UTILISANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.10.2017 Bulletin 2017/43**

(73) Proprietor: **Nissan Motor Co., Ltd.
Kanagawa 220-8623 (JP)**

(72) Inventors:
• **YOSHIOKA, Youichi
Atsugi-shi
Kanagawa 243-0123 (JP)**
• **CHIBA, Nobutaka
Atsugi-shi
Kanagawa 243-0123 (JP)**
• **WATANABE, Manabu
Atsugi-shi
Kanagawa 243-0123 (JP)**

• **MIKI, Humihiro
Atsugi-shi
Kanagawa 243-0123 (JP)**
• **KABURAGI, Tomohiro
Atsugi-shi
Kanagawa 243-0123 (JP)**

(74) Representative: **Grünecker Patent- und
Rechtsanwälte
PartG mbB
Leopoldstraße 4
80802 München (DE)**

(56) References cited:
EP-A1- 2 800 176        WO-A1-2012/055948
WO-A1-2014/199785       JP-A- 2005 078 999
JP-A- 2006 236 887      JP-A- 2008 198 391
JP-A- 2009 521 792      JP-A- 2014 107 132
US-A1- 2010 270 497

**Description**

**TECHNICAL FIELD**

The present invention relates to a negative electrode active material for a lithium ion secondary battery, and a lithium ion secondary battery using the same. The negative electrode active material for a lithium ion secondary battery and the a lithium ion secondary battery using the same according to the present invention are used in a driving power source and an auxiliary power source for motors of vehicles such as electric vehicles, fuel cell vehicles, and hybrid electric vehicles as secondary batteries, capacitors, and the like.

**BACKGROUND ART**

In recent years, cut down of the amount of carbon dioxide has been ardently desired in order to cope with air pollution and global warming. In the motor vehicle industry, cut down of carbon dioxide emissions due to introduction of electric vehicles (EV) and hybrid electric vehicles (HEV) has been highly expected, and development of electric devices such as secondary batteries for driving motors, which hold the key to practical use of these has been actively carried out.

The secondary batteries for driving motors are required to exhibit extremely high-output characteristics and high energy as compared to consumer lithium ion secondary batteries to be used in mobile phones, notebook computers, and the like. Hence, lithium ion secondary batteries having the highest theoretical energy among all the batteries have attracted attention, and development thereof is rapidly advanced at present.

A lithium ion secondary battery generally has a configuration in which a positive electrode in which a positive electrode active material and the like are coated on both sides of a positive electrode current collector by using a binder and a negative electrode in which a negative electrode active material and the like are coated on both sides of a negative electrode current collector by using a binder are connected to each other via an electrolyte layer and housed in a battery case.

Hitherto, a carbon and graphite-based material, which is advantageous from the viewpoint of lifespan of charge and discharge cycles and cost, has been used in the negative electrode of a lithium ion secondary battery. However, in the case of a carbon and graphite-based negative electrode material, charge and discharge proceed by occlusion and release of lithium ions into and from the graphite crystals, and there is thus a disadvantage that a charge and discharge capacity that is equal to or higher than the theoretical capacity, 372 mAh/g, to be obtained from $LiC_6$ of the maximum lithium-introduced compound is not obtained. For this reason, it is difficult to obtain a capacity and an energy density which satisfy the practical use level of a vehicle application from a carbon and graphite-based negative electrode material.

In contrast, a battery using a material to be alloyed with Li in the negative electrode is expected as a negative electrode material in a vehicle application since the energy density is improved as compared to a conventional carbon and graphite-based negative electrode material. For example, a Si material occludes and releases 3.75 mol of lithium ions per 1 mol as in the following Reaction Formula (A) in charge and discharge, and the theoretical capacity is 3600 mAh/g in $Li_{15}Si_4$ (= $Li_{3.75}Si$).

[Chemical Formula 1]

$$Si + 3.75Li^+ + e^- \rightleftarrows Li_{3.75}Si \qquad (A)$$

However, in a lithium ion secondary battery using a material to be alloyed with Li in the negative electrode, expansion and contraction of the negative electrode at the time of charge and discharge is great. For example, the volume expansion in the case of occluding a Li ion is about 1.2 times for a graphite material, but a great volume change (about 4 times) occurs for the Si material since the amorphous state is converted to a crystalline state when Si and Li are alloyed, and there is thus a problem that the cycle lifespan of the electrode decreases. In addition, in the case of a Si negative electrode active material, the capacity and the cycle durability have a trade-off relationship, and there is thus a problem that it is difficult to improve the cycle durability while having a high capacity.

Here, Patent Literature 1 discloses an invention aimed to provide a nonaqueous electrolyte secondary battery including a negative electrode pellet having a high capacity and an excellent cycle lifespan. Specifically, a silicon-containing alloy is disclosed which is obtained by mixing and wet pulverizing a silicon powder and a titanium powder by a mechanical alloying method and in which a material including a first phase containing silicon as a main body and a second phase containing a silicide of titanium ($TiSi_2$ or the like) is used as a negative electrode active material. It is also disclosed that at least either of these two phases is amorphous or low crystalline. Patent Literature 2 specifically discloses a Si-containing alloy having the composition $Si_{60}Sn_{20}Ti_{20}$, and a number of negative electrode active materials prepared by magnetron sputtering. Patent Literature 3 also discloses amorphous Si-containing alloys prepared by magnetron sputtering. Patent Literature 4 and 5 disclose further examples of Si-containing alloys.

Citation List

Patent Literatures

Patent Literature 1: WO 2006/129415 A
Patent Literature 2: WO 2014/199785 A1
Patent Literature 3: EP 2 800 176 A1
Patent Literature 4: WO 2012/055948 A1
Patent Literature 5: US 2010/0270497 A1

## SUMMARY OF INVENTION

Technical Problem

According to the investigations of the present inventors, in an electric device such as a lithium ion secondary battery using the negative electrode pellet described in Patent Literature 1, it has been revealed that the cycle durability is not sufficient in some cases even though it is described that favorable cycle durability can be exhibited.

Accordingly, an object of the present invention is to provide a means capable of improving the cycle durability of a lithium ion secondary battery.

In order to solve the above problems, the present inventors have carried out intensive researches. As a result, it has been found out that the above problems can be solved by controlling the relationship between two specific diffraction peak intensities in the X-ray diffraction measurement of the silicon-containing alloy in a negative electrode active material including a silicon-containing alloy having a predetermined composition, whereby the present invention has been completed.

That is, the present invention relates to a negative electrode active material for a lithium ion secondary battery. The negative electrode active material for a lithium ion secondary battery includes a silicon-containing alloy having a composition represented by the following Chemical Formula (1):

[Chemical Formula 2]

$$\mathrm{Si}_x\mathrm{Sn}_y\mathrm{M}_z\mathrm{A}_a \qquad (1)$$

(in Chemical Formula (1) above, A is an unavoidable impurity,
M is titanium (Ti), and
x, y, z, and a represent values in terms of percent by mass. At this time, $0 < x < 100$, $0 < y < 100$, $7 < z < 100$, and $0 \leq a < 0.5$ and $x + y + z + a = 100$). Moreover, a ratio value (B/A) of a diffraction peak intensity B of a (001) plane of Sn to a diffraction peak intensity A of a (111) plane of Si is 0.3 or more and 3.7 or less in an X-ray diffraction measurement of the silicon-containing alloy using a CuK$\alpha$1 ray, and a full width at half maximum of a diffraction peak of a (001) plane of Sn in a range of $2\theta = 26$ to $35°$ is 0.6° or greater in an X-ray diffraction measurement of the silicon-containing alloy using a CuK$\alpha$1 ray. Here, the diffraction peak of the (111) plane of Si is present in a range of $2\theta = 24$ to $33°$ and the diffraction peak of the (001) plane of Sn is present in a range of $2\theta = 26$ to $35°$. The diffraction peak intensities A and B the full width at half maximum are determined according to methods described below. In addition, the silicon-containing alloy has a structure comprising a parent phase containing amorphous or low crystalline silicon as a main component and a silicide phase containing a silicide of titanium (Ti), the silicide phase being dispersed in the parent phase, wherein tin (Sn) is dispersed in silicon (Si) of the parent phase.

According to the present invention, Sn can be sufficiently dispersed in Si and the amorphization of Si can proceed by setting the value of B/A to 0.3 or more. In addition, segregation of Sn can be suppressed by setting the value of B/A to 3.7 or less. As a result, the cycle durability of the lithium ion secondary battery using the negative electrode active material can be improved.

## BRIEF DESCRIPTION OF DRAWINGS

Fig. 1 is a cross-sectional schematic view which schematically illustrates the outline of a stacked type flat non-bipolar lithium ion secondary battery of a representative embodiment according to the present invention.

Fig. 2 is a perspective view which schematically illustrates the outer appearance of a stacked type flat lithium ion secondary battery of a representative embodiment of the present invention.

Fig. 3 is a view for explaining methods of calculating a diffraction peak intensity A of a (111) plane of Si, a diffraction peak intensity B of a (001) plane of Sn, and a full width at half maximum (FWHM) of a diffraction peak of a (001) plane of Sn in an X-ray diffraction spectrum.

## DESCRIPTION OF EMBODIMENTS

Hereinafter, embodiments of a negative electrode active material for a lithium ion secondary battery and a lithium ion secondary battery using the same of the present invention will be described with reference to the drawings. However, the technical scope of the present invention should be determined based on the description of claims and is not limited to only the following embodiments. Incidentally, in the description of the drawings, the same elements are denoted by the same reference numerals, and duplicate descriptions are omitted. In addition, the dimensional ratios of the drawings are exaggerated for convenience of description and may differ from actual ratios.

Hereinafter, a basic configuration of a lithium ion secondary battery to which the negative electrode active material for electric device of the present invention can be applied will be described with reference to the drawings.

First, in a negative electrode for lithium ion secondary battery of a representative embodiment of a negative electrode containing the negative electrode active material according to the present invention, and a lithium ion secondary battery using the same, the voltage of the cell (single battery layer) is great and a high-energy density and a high-output density can be achieved. For this reason, a lithium ion secondary battery using the negative electrode active material for lithium ion secondary battery of the present embodiment is excellent for driving power source and auxiliary power source of a vehicle. As a result, it can be suitably used as a lithium ion secondary battery for driving power and the like of a vehicle. In addition to this, it can also be sufficiently applied to a lithium ion secondary battery for mobile devices such as mobile phones.

That is, the lithium ion secondary battery to be a target of the present embodiment may be one that is formed by using the negative electrode active material for lithium ion secondary battery of the present embodiment to be described below, and other constituent requirements thereof are not particularly limited.

For example, in the case of distinguishing the lithium ion secondary battery by the form and structure, it can be applied to any conventionally known form and structure such as a stacked type (flat type) battery and a wound type (cylindrical type) battery. It is advantageous to employ a stacked type (flat type) battery structure from the viewpoint of cost and workability since long-term reliability can be secured by a simple sealing technique such as thermocompression bonding.

In addition, in the case of considering the electrical connection form (electrode structure) in the lithium ion secondary battery, the lithium ion secondary battery can be applied to both a non-bipolar (internal parallel connection type) battery and a bipolar (internal series connection type) battery.

In the case of distinguishing the lithium ion secondary battery by the type of the electrolyte layer therein, the lithium ion secondary battery can also be applied to batteries having any conventionally known type of electrolyte layer such as a solution electrolyte type battery using a solution electrolyte such as a nonaqueous electrolytic solution in the electrolyte layer and a polymer battery using a polymer electrolyte in the electrolyte layer. The polymer battery is classified into a gel electrolyte type battery using a polymer gel electrolyte (also simply referred to as a gel electrolyte) and a solid polymer (all-solid) type battery using a polymer solid electrolyte (also simply referred to as a polymer electrolyte).

Accordingly, in the following description, a non-bipolar (internal parallel connection type) lithium ion secondary battery using the negative electrode active material for lithium ion secondary battery of the present embodiment will be significantly briefly described with reference to the drawings. However, the technical scope of the lithium ion secondary battery of the present embodiment is not limited to these.

<Overall Structure of Battery>

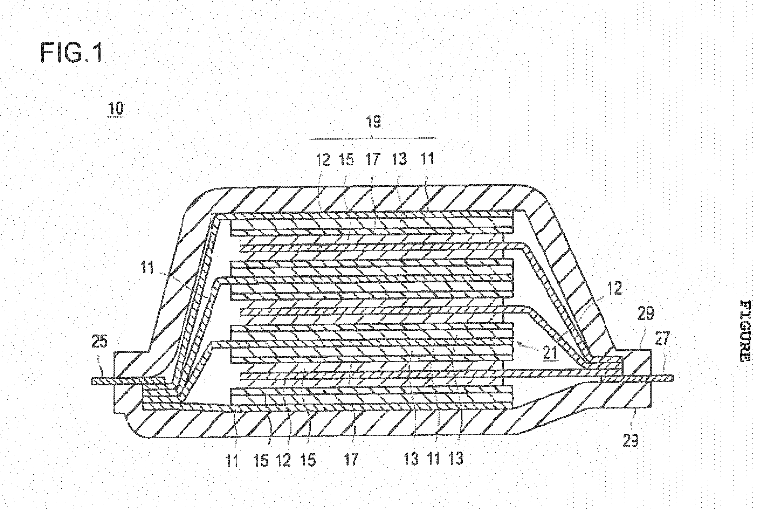

Fig. 1 is a cross-sectional schematic view which schematically illustrates the overall structure of a flat type (stacked type) lithium ion secondary battery (hereinafter, also simply referred to as the "stacked type battery") of a representative embodiment of the present invention.

As illustrated in Fig. 1, a stacked type battery 10 of the present embodiment has a structure in which a substantially rectangular power generating element 21 in which a charge and discharge reaction actually proceeds is sealed in the interior of a laminate sheet 29 of an outer package. Here, the power generating element 21 is configured to stack a positive electrode in which a positive electrode active material layer 15 is disposed on both sides of a positive electrode current collector 12, an electrolyte layer 17, and a negative electrode in which a negative electrode active material layer 13 is disposed on both sides of a negative electrode current collector 11. Specifically, the negative electrode, the electrolyte layer, and the positive electrode are stacked in this order such that one positive electrode active material layer 15 and the adjacent negative electrode active material layer 13 face each other via the electrolyte layer 17.

By this, the adjacent positive electrode, electrolyte layer, and negative electrode constitute one single battery layer 19. Hence, it can also be said that the stacked type battery 10 illustrated in Fig. 1 has a configuration in which a plurality of single battery layers 19 are stacked to be electrically connected in parallel. Incidentally, the positive electrode active material layer 15 is disposed only on one side of each of the outermost positive electrode current collectors to be positioned at both outermost layers of the power generating element 21, but the active material layer may be provided on both sides thereof. That is, a current collector which has an active material layer only on one side and is thus dedicated to the outermost layer is not prepared but a current collector having an active material layer on both sides may be used as it is as the outermost current collector. In addition, the positive electrode and the negative electrode may be reversely disposed from Fig. 1 so that the outermost negative electrode current collector is positioned at both outermost layers of the power generating element 21, and the negative electrode active material layer may be disposed on one side or both sides of the outermost negative electrode current collector.

A positive electrode current collecting plate 27 and a negative electrode current collecting plate 25 which are electrically connected to the respective electrodes (the positive electrode and the negative electrode) have a structure in which they are respectively attached to the positive electrode current collector 12 and the negative electrode current collector 11 and led to the outside of the laminate sheet 29 so as to be sandwiched between the end portions of the laminate sheet 29. The positive electrode current collecting plate 27 and the negative electrode current collecting plate 25 may be respectively attached to the positive electrode current collector 12 and the negative electrode current collector 11 of the respective electrodes via a positive electrode lead and a negative electrode lead (not illustrated) by ultrasonic welding, resistance welding, or the like if necessary.

The lithium ion secondary battery described above is characterized by a negative electrode. The important constituent members of the battery including the negative electrode will be described below.

<Active Material Layer>

The active material layer 13 or 15 contains an active material, and it further contains other additives if necessary.

[Positive Electrode Active Material Layer]

The positive electrode active material layer 15 contains a positive electrode active material.

(Positive Electrode Active Material)

Examples of the positive electrode active material may include lithium-transition metal composite oxides such as $LiMn_2O_4$, $LiCoO_2$, $LiNiO_2$, $Li(Ni-Mn-Co)O_2$, and those in which a part of these transition metals are substituted with other elements, lithium-transition metal phosphate compounds, and lithium-transition metal sulfate compounds. Depending on the cases, two or more kinds of positive electrode active materials may be used concurrently. A lithium-transition metal composite oxide is preferably used as the positive electrode active material from the viewpoint of capacity and output characteristics. A composite oxide containing lithium and nickel is more preferably used, and $Li(Ni-Mn-Co)O_2$ and those in which a part of these transition metals are substituted with other elements (hereinafter, also simply referred to as the "NMC composite oxide") are still more preferably used. The NMC composite oxide has a layered crystal structure in which a lithium atom layer and a transition metal (Mn, Ni, and Co are orderly disposed) atom layer are alternately stacked via an oxygen atom layer, one Li atom is contained per one atom of the transition metal M, the amount of Li that can be taken out is twofold that of spinel type lithium manganese oxide, that is, the supply ability is twofold, and the NMC composite oxide can thus have a high capacity.

As described above, the NMC composite oxide also includes a composite oxide in which a part of the transition metal elements is substituted with other metal elements. Examples of the other elements in that case may include Ti, Zr, Nb, W, P, Al, Mg, V, Ca, Sr, Cr, Fe, B, Ga, In, Si, Mo, Y, Sn, V, Cu, Ag, and Zn, the other elements are preferably Ti, Zr, Nb, W, P, Al, Mg, V, Ca, Sr, and Cr, the other elements are more preferably Ti, Zr, P, Al, Mg, and Cr, and from the viewpoint of improving the cycle characteristics, the other elements are still more preferably Ti, Zr, Al, Mg and Cr.

The NMC composite oxide preferably has a composition represented by General Formula (1): $Li_aNi_bMn_cCo_dM_xO_2$ (where a, b, c, d, and x satisfy $0.9 \leq a \leq 1.2$, $0 < b < 1$, $0 < c \leq 0.5$, $0 < d \leq 0.5$, $0 \leq x \leq 0.3$, and b + c + d = 1. M is at least one kind of element selected from Ti, Zr, Nb, W, P, Al, Mg, V, Ca, Sr, or Cr) since the theoretical discharge capacity is high. Here, a represents the atomic ratio of Li, b represents the atomic ratio of Ni, c represents the atomic ratio of Mn, d represents the atomic ratio of Co, and x represents the atomic ratio of M. From the viewpoint of cycle characteristics, it is preferable that $0.4 \leq b \leq 0.6$ be satisfied in General Formula (1). Incidentally, the composition of the respective elements can be measured by, for example, inductively coupled plasma (ICP) emission spectrometry.

In general, it is known that nickel (Ni), cobalt (Co), and manganese (Mn) contribute to the capacity and output characteristics from the viewpoint of improving purity of the material and improving electron conductivity. Ti or the like partially substitutes the transition metal in the crystal lattice. From the viewpoint of cycle characteristics, it is preferable that a part of the transition element be substituted with another metal element, and it is particularly preferable that $0 < x \leq 0.3$ in General Formula (1). It is considered that the crystal structure is stabilized by a solid solution formed by at least one kind selected from the group consisting of Ti, Zr, Nb, W, P, Al, Mg, V, Ca, Sr, and Cr, and as a result, a decrease in capacity of the battery can be prevented even when charge and discharge are repeated and excellent cycle characteristics can be realized.

As a more preferred embodiment, it is preferable that b, c, and d satisfy $0.44 \leq b \leq 0.51$, $0.27 \leq c \leq 0.31$, and $0.19 \leq d \leq 0.26$ in General Formula (1) from the viewpoint of improving the balance between capacity and lifespan characteristics. For example, $LiNi_{0.5}Mn_{0.3}Co_{0.2}O_2$ has a greater capacity per unit weight as compared to $LiCoO_2$, $LiMn_2O_4$, $LiNi_{1/3}Mn_{1/3}Co_{1/3}O_2$, and the like that have been proven in general consumer batteries, can improve the energy density, and thus has an advantage of being able to be used in fabrication of a compact and high capacity battery, and it is also preferable from the viewpoint of the cruising distance. Incidentally, $LiNi_{0.8}Co_{0.1}Al_{0.1}O_2$ is more advantageous from the viewpoint of a greater capacity, but it has a disadvantage from the viewpoint of lifespan characteristics. In contrast, $LiNi_{0.5}Mn_{0.3}Co_{0.2}O_2$ exhibits excellent lifespan characteristics comparable to $LiNi_{1/3}Mn_{1/3}Co_{1/3}O_2$.

Depending on the cases, two or more kinds of positive electrode active materials may be used concurrently. A lithium-transition metal composite oxide is preferably used as the positive electrode active material from the viewpoint of capacity and output characteristics. Incidentally, it is needless to say that a positive electrode active material other than those described above may be used.

The average particle diameter of the positive electrode active material contained in the positive electrode active material layer 15 is not particularly limited, but it is preferably from 1 to 30 μm and more preferably from 5 to 20 μm from the viewpoint of increasing the output. Incidentally, in the present specification, the term "particle diameter" means the longest distance among the distances between arbitrary two points on the contour line of the active material particle (observation plane) to be observed by using an observation means such as a scanning electron microscope (SEM) or a transmission electron microscope (TEM). In addition, in the present specification, as the value of "average particle diameter", a value calculated as an average value of the particle diameters of particles to be observed in several to several tens of visual fields by using an observation means such as a scanning electron microscope (SEM) or a transmission electron microscope (TEM) is adopted. The particle diameter and average particle diameter of other constituent components can also be defined in the same manner.

The positive electrode active material layer 15 can contain a binder.

(Binder)

A binder is added for the purpose of binding the active materials with each other or the active material with the current collector and thus maintaining the electrode structure. The binder to be used in the positive electrode active material layer is not particularly limited, but examples thereof may include the following materials. Thermoplastic polymers such as polyethylene, polypropylene, polyethylene terephthalate (PET), polyether nitrile (PEN), polyacrylonitrile, polyimide, polyamide, polyamide-imide, cellulose, carboxymethyl cellulose (CMC), an ethylene-vinyl acetate copolymer, polyvinyl chloride, styrene-butadiene rubber (SBR), isoprene rubber, butadiene rubber, ethylene-propylene rubber, an ethylene-propylene-diene copolymer, a styrene-butadiene-styrene block copolymer and any hydrogenated product thereof, and a styrene-isoprene-styrene block copolymer and any hydrogenated product thereof, fluorine resins such as polyvinylidene fluoride (PVdF), polytetrafluoroethylene (PTFE), a tetrafluoroethylene-hexafluoropropylene copolymer (FEP), a tetrafluoroethylene-perfluoroalkylvinylether copolymer (PFA), an ethylene-tetrafluoroethylene copolymer (ETFE), polychlorotrifluoroethylene (PCTFE), an ethylene-chlorotrifluoroethylene copolymer (ECTFE), and polyvinyl fluoride (PVF), vinylidene fluoride-based fluorine rubber such as vinylidene fluoride-hexafluoropropylene-based fluorine rubber (VDF-HFP-based fluorine rubber), vinylidene fluoride-hexafluoropropylene-tetrafluoroethylene-based fluorine rubber (VDF-HFP-TFE-based fluorine rubber), vinylidene fluoride-pentafluoropropylene-based fluorine rubber (VDF-PFP-based fluorine rubber), vinylidene fluoride-pentafluoropropylene-tetrafluoroethylene-based fluorine rubber (VDF-PFP-TFE-based fluorine rubber), vinylidene fluoride-perfluoromethyl vinyl ether-tetrafluoroethylene-based fluorine rubber (VDF-PFMVE-TFE-based fluorine rubber), and vinylidene fluoride-chlorotrifluoroethylene-based fluorine rubber (VDF-CTFE-based fluorine rubber), and an epoxy resin. Among them, polyvinylidene fluoride, polyimide, styrene-butadiene, carboxymethyl cellulose, polypropylene, polytetrafluoroethylene, polyacrylonitrile, polyamide, and polyamide-imide are more preferable. These suitable binders exhibit excellent heat resistance, further have a significantly wide potential window, are stable to both the positive electrode potential and the negative electrode potential, and can be thus used in the active material layer. These binders may be used singly or two kinds thereof may be used concurrently.

The amount of binder contained in the positive electrode active material layer is not particularly limited as long as it is an amount in which the active material can be bound, but it is preferably from 0.5 to 15% by mass and more preferably from 1 to 10% by mass with respect to the active material layer.

The positive electrode (positive electrode active material layer) can be formed by any method of a kneading method, a sputtering method, a vapor deposition method, a CVD method, a PVD method, an ion plating method, or a thermal spraying method in addition to an ordinary method to coat a slurry.

[Negative Electrode Active Material Layer]

The negative electrode active material layer 13 contains a negative electrode active material.

(Negative Electrode Active Material)

In the present embodiment, the negative electrode active material is characterized by containing a silicon-containing alloy having a specific composition of elements.

In the present embodiment, the silicon-containing alloy has a composition represented by the following Chemical Formula (1).

[Chemical Formula 3]

$$Si_xSn_yM_zA_a \qquad (1)$$

In Chemical Formula (1) above, A is an unavoidable impurity, M is titanium (Ti), and x, y, z, and a represent values in terms of percent by mass. At this time, $0 < x < 100$, $0 < y < 100$, $7 < z < 100$, and $0 \leq a < 0.5$ and $x + y + z + a = 100$.

As it is apparent from Chemical Formula (1) above, in the present embodiment, it is essential that the silicon-containing alloy is a ternary system of Si, Sn, and M

(titanium (Ti)). Excellent cycle durability can be exhibited because the silicon-containing alloy is a ternary system of Si, Sn, and M in this manner. In addition, in the present specification, the term "a unavoidable impurity" means a component that is present in the raw material or has been unavoidably mixed into the Si-containing alloy during the production process. The unavoidable impurity is not originally required, but it is in a trace amount and does not affect the characteristics of the Si alloy, and it is thus allowable impurities.

The silicon-containing alloy constituting the negative electrode active material in the present embodiment contains a parent phase containing amorphous or low crystalline silicon as a main component. Thus, a lithium ion secondary battery having a high capacity and excellent cycle durability can be provided when silicon constituting the parent phase is amorphous or low crystalline.

The parent phase constituting the silicon-containing alloy is a phase containing silicon as a main component, and it is a phase containing Si and Sn. This parent phase (a phase containing Si as a main component) is a phase involved in occlusion and release of lithium ions at the time of operation of the lithium ion secondary battery of the present embodiment, and it is a phase capable of electrochemically reacting with Li. As the parent phase is a phase containing Si and Sn, it is possible to exert excellent cycle durability as well as to occlude and release a large amount of Li per unit weight and per unit volume. However, Si exhibits poor electron conductivity, and the parent phase may thus contain trace amounts of additive elements such as phosphorus and boron, transition metals, and the like.

Meanwhile, in addition to the parent phase, the silicon-containing alloy constituting the negative electrode active material in the present embodiment contains a silicide phase dispersed in the parent phase as well. This silicide phase is a phase containing a silicide of titanium(for example, $TiSi_2$). This silicide phase contains a silicide (also referred to as a silicide) so as to exhibit excellent affinity for the parent phase and to be able to suppress cracking at the crystal interface particularly due to volume expansion at the time of charge. Furthermore, the silicide phase is superior to the parent phase in electron conductivity and hardness. For this reason, the silicide phase improves low electron conductivity of the parent phase and also plays a role of maintaining the shape of the active material against the stress at the time of expansion.

A plurality of phases may be present in the silicide phase, and, for example, two or more phases having different composition ratios of the transition metal element M to Si (for example, $MSi_2$ and $MSi$) may be present. Here, the kind of the transition metal contained in the silicide phase is Ti. The silicides formed of these elements have a higher electron conductivity than silicides of other elements and a high strength. In particular, $TiSi_2$ of a silicide in a case in which the transition metal element is Ti exhibits significantly excellent electron conductivity.

Particularly, in a case in which two or more phases (for example, $TiSi_2$ and $TiSi$) having different composition ratios are present in the silicide phase, a $TiSi_2$ phase is 50% by mass or more, preferably 80% by mass or more, more preferably 90% by mass or more, particularly preferably 95% by mass or more, and most preferably 100% by mass of the silicide phase.

Here, in order to judge whether the silicon-containing alloy constituting the negative electrode active material in the present embodiment has the parent phase and the silicide phase as described above or not, the following method is used. That is, the presence or absence of a diffraction spot exhibiting crystallinity of the silicide phase may be confirmed by conducting the electron diffraction measurement using the following measuring apparatus under the following conditions. The presence of such a spot proves the presence of a silicide phase. In addition, in order to judge whether the parent phase is amorphous or low crystalline or not, it is effective to confirm the presence or absence of a so-called "halo pattern" in which the diffraction image is wide and unclear in the same electron diffraction measurement, and the presence of a halo pattern proves that the parent phase is amorphous or low crystalline.

(Electron Diffraction Measurement)

1) Apparatus: Field emission type electron microscope (JEM 2100F manufactured by JEOL Ltd.)
Image acquisition: Digital Micrograph
2) Measurement conditions: acceleration voltage = 200 kV
Beam diameter = about 1.0 nm $\phi$.

In the present embodiment, it is possible to even further suppress the phase transition between an amorphous state and a crystalline state at the time of alloying with Li and thus to improve the cycle lifespan particularly by selecting Ti as an additive element to the negative electrode active material (silicon-containing alloy) and further adding Sn as a second additive element. In addition, by adopting this constitution, a negative electrode active material is formed to have a higher capacity than a conventional negative electrode active material (for example, a carbon-based negative electrode active material). Hence, according to the present invention, M is titanium (Ti) in the composition represented by Chemical Formula (1) above.

Here, the reason for that the phase transition between an amorphous state and a crystalline state is suppressed at the time of alloying Si with Li is because transition from an amorphous state to a crystalline state occurs to cause a great change in volume (about fourfold) at the time of alloying Si with Li in a Si material and the particles themselves are thus broken and lose the function as an active material. Hence, by suppressing the phase transition between an amorphous state and a crystalline state, it is possible to suppress collapse of the particles themselves, to maintain the function (high capacity) as an active material, and also to improve the cycle lifespan. By selecting such an additive element, it is possible to provide a Si alloy negative electrode active material having a high capacity and high cycle durability.

In the composition of Chemical Formula (1) above, the composition ratio z of M (Ti) is $7 < z < 100$, preferably $10 < z < 100$, more preferably $15 < z < 100$, and particularly preferably $20 \leq z < 100$. By setting the composition ratio z of M (Ti) to be in such a range, the cycle characteristics can be even further improved.

More preferably, x, y, and z in Chemical Formula (1) satisfy the following Mathematical Formula (1) or (2).
[Mathematical Formula 1]

$$35 \leq x \leq 78,\ 7 \leq y \leq 30,\ 0 < z \leq 37 \qquad (1)$$

$$35 \leq x \leq 52,\ 30 \leq y \leq 51,\ 0 < z \leq 35 \qquad (2)$$

An initial discharge capacity exceeding 1000 Ah/g can be obtained and the cycle lifespan can also exceed 90% (50 cycles) when the contents of the respective components are in the above ranges.

Incidentally, it is desirable to set the content of M (Ti) to be in a range of more than 7% by mass from the viewpoint of attaining further improvement in the above characteristics of the negative electrode active material. That is, it is preferable that x, y, and z satisfy the following Mathematical Formula (3) or (4).
[Mathematical Formula 2]

$$35 \leq x \leq 78,\ 7 \leq y \leq 30,\ 7 < z \leq 37 \qquad (3)$$

$$35 \leq x \leq 52,\ 30 \leq y \leq 51,\ 7 < z \leq 35 \qquad (4)$$

This makes it possible to even further improve the cycle characteristics.

Moreover, it is preferable that x, y, and z satisfy the following Mathematical Formula (5) or (6):
[Mathematical Formula 3]

$$35 \leq x \leq 68, \ 7 \leq y \leq 30, \ 18 \leq z \leq 37 \qquad (5)$$

$$39 \leq x \leq 52, \ 30 \leq y \leq 51, \ 7 < z \leq 20 \qquad (6)$$

from the viewpoint of securing more favorable cycle durability.

Moreover, it is preferable that x, y, and z satisfy the following Mathematical Formula (7):
[Mathematical Formula 4]

$$46 \leq x \leq 58, \ 7 \leq y \leq 21, \ 24 \leq z \leq 37 \qquad (7)$$

in the negative electrode active material of the present embodiment from the viewpoints of initial discharge capacity and cycle durability.

Incidentally, as described above, A is an impurity (an unavoidable impurity) other than the three components described above, which is derived from raw materials and the production method. Above a is $0 \leq a < 0.5$ and preferably $0 \leq a < 0.1$.

Incidentally, it is possible to confirm whether the negative electrode active material (silicon-containing alloy) has the composition of Chemical Formula (1) above or not by qualitative analysis using X-ray fluorometry (XRF) and quantitative analysis using inductively coupled plasma (ICP) emission spectrometry.

The silicon-containing alloy constituting the negative electrode active material in the present embodiment is characterized in that the ratio value (B/A) of a diffraction peak intensity B of a (001) plane of Sn to a diffraction peak intensity A of a (111) plane of Si is 0.3 or more and 3.7 or less in an X-ray diffraction measurement of the silicon-containing alloy using a CuKα1 ray. Here, the diffraction peak of the (111) plane of Si is present in a range of $2\theta = 24$ to $33°$ and the diffraction peak of the (001) plane of Sn is present in a range of $2\theta = 26$ to $35°$. The lower limit value of this ratio value (B/A) is preferably 0.4 or more and more preferably 0.9 or more. In addition, the upper limit value of this ratio value (B/A) is preferably 2.7 or less and more preferably 2.2 or less. The degree of being amorphous of Si is low and sufficient cycle durability is not obtained when the ratio value (B/A) is less than 0.3 since Sn is not sufficiently dispersed in Si. Meanwhile, crystalline Sn segregates in Si and sufficient cycle durability is not obtained when the ratio value (B/A) exceeds 3.7.

The method of controlling the ratio value (B/A) to 0.3 or more and 3.7 or less is not particularly limited, but the ratio value (B/A) can be adjusted by appropriately setting the composition of raw materials and the time for alloying treatment. For example, when the proportion of Sn content to Si is increased, the proportion of crystalline Sn increases and the ratio value (B/A) thus tends to increase. In addition, when the time for alloying treatment is increased, the degree of being amorphous of Si and Sn increases and the ratio value (B/A) thus converges to around 1.5. In addition, the ratio value (B/A) is also changed depending on the kind of the element M. As an example, the ratio value (B/A) tends to increase in the case of using a transition metal element such as Ti as the element M than in the case of using Al.

In the present application, the X-ray diffraction analysis for calculating the intensity ratio of diffraction peak is conducted by using the method described in the section for Examples to be described later.

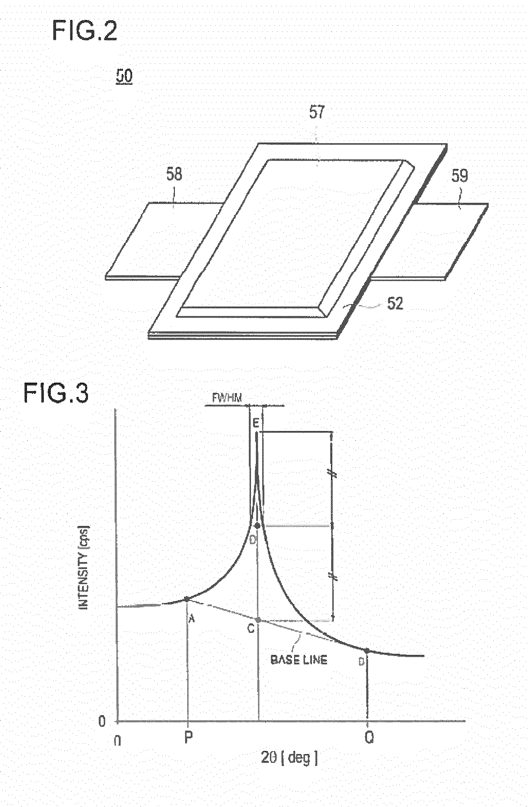

Here, the diffraction peak intensity A of the (111) plane of Si in a range of $2\theta = 24$ to $33°$ can be determined as follows (see Fig. 3).

First, in the diffraction spectrum obtained by X-ray diffraction analysis, the point at which a perpendicular line at $2\theta = 24°$ ($2\theta = $ P in Fig. 3) intersects with the diffraction spectrum is taken as A. In the same manner, the point at which a perpendicular line at $2\theta = 33°$ ($2\theta = $ Q in Fig. 3) intersects with the X-ray diffraction spectrum is taken as B. Here, a line segment AB is taken as the base line, and the point at which a perpendicular line at the diffraction peak ($2\theta = $ about $28.5°$) of the (111) plane of Si intersects with the base line is taken as C. Thereafter, the diffraction peak intensity A of the (111) plane of Si can be determined as the length of a line segment CE connecting a vertex E of the diffraction peak ($2\theta = $ about $28.5°$) of the (111) plane of Si and the point C.

In the same manner as the above, the diffraction peak intensity B of the (001) plane of Sn in a range of $2\theta = 26$ to $35°$ can also be determined. That is, in the diffraction spectrum obtained by X-ray diffraction analysis, the point at which a perpendicular line at $2\theta = 26°$ ($2\theta = $ P in Fig. 3) intersects with the diffraction spectrum is taken as A. In the same manner, the point at which a perpendicular line at $2\theta = 35°$ ($2\theta = $ Q in Fig. 3) intersects with the X-ray diffraction spectrum is taken as B. Here, a line segment AB is taken as the base line, and the point at which a perpendicular line of the diffraction peak (2θ = about 30.6°) of the (001) plane of Sn intersects with the base line is taken as C. Thereafter, the diffraction peak intensity B of the (001) plane of Sn can be determined as the length of a line segment CE connecting a vertex E of the diffraction peak (2θ = about 30.6°) of the (001) plane of Sn and the point C.

In addition, in the silicon-containing alloy constituting the negative electrode active material in the present embodiment, the full width at half maximum (FWHM) of the diffraction peak of the (001) plane of Sn in a range of 2θ = 26 to 35° is preferably 0.6° or greater in the X-ray diffraction measurement using the CuKα1 ray. The full width at half maximum is more preferably 0.65° or greater, still more preferably 0.70° or greater, and particularly preferably 0.75° or greater. In general, the fact that the full width at half maximum of the diffraction peak of the (001) plane of Sn is greater means that the degree of being amorphous of Sn is higher. When Sn is amorphous, the dispersibility of Sn into amorphous Si is improved, and even further excellent cycle durability can be exerted.

The method of controlling the full width at half maximum to 0.6° or greater is not particularly limited, but the full width at half maximum can be adjusted by appropriately setting the composition of raw materials and the time for alloying treatment. For example, when the time for alloying treatment is increased, the degree of being amorphous of Sn increases and the full width at half maximum thus increases. In addition, by decreasing the content ratio of Sn in the composition of alloy, crystalline Sn is less likely to remain and the full width at half maximum thus tends to increase.

In the present application, the X-ray diffraction analysis for calculating the full width at half maximum is conducted by using the method described in the section for Examples to be described later.

Here, the full width at half maximum of the diffraction peak of the (001) plane of Sn in a range of 2θ = 26 to 35° can be determined as follows (see Fig. 3).

First, in the diffraction spectrum obtained by X-ray diffraction analysis, the point at which a perpendicular line at 2θ = 26° (2θ = P in Fig. 3) intersects with the diffraction spectrum is taken as A. In the same manner, the point at which a perpendicular line at 2θ = 35° (2θ = Q in Fig. 3) intersects with the X-ray diffraction spectrum is taken as B. Here, a line segment AB is taken as the base line, and the point at which a perpendicular line of the diffraction peak (2θ = about 30.6°) of the (001) plane of Sn intersects with the base line is taken as C. Next, a line segment CE connecting a vertex E of the diffraction peak (2θ = about 30.6°) of the (001) plane of Sn and the point C is bisected (a center point of the bisected line segment CE is taken as D). Thereafter, parallel line passing through the center point D is drawn, and the full width at half maximum (FWHM) can be determined as the length between two points at which the parallel line intersects with the X-ray diffraction pattern.

The particle diameter of the silicon-containing alloy constituting the negative electrode active material in the present embodiment is not particularly limited, but the average particle diameter is preferably from 0.1 to 20 μm and more preferably from 0.2 to 10 μm.

(Method of Producing Negative Electrode Active Material)

The method of producing the negative electrode active material for a lithium ion secondary battery according to the present embodiment is not particularly limited, and conventionally known knowledge can be appropriately referred to. In the present application, a production method including the following steps is provided as an example of a production method for setting the value of the intensity ratio B/A of the diffraction peaks by X-ray diffraction analysis to be in the range as described above.

First, a step of mixing raw materials of the silicon-containing alloy to obtain a mixed powder is carried out. In this step, the raw materials of the alloy are mixed in consideration of the composition of the negative electrode active material (silicon-containing alloy) to be obtained. As the raw materials of the alloy, the form and the like thereof are not particularly limited as long as the ratio of elements required as a negative electrode active material can be realized. For example, it is possible to use one obtained by mixing simple substances of elements constituting the negative electrode active material at the intended ratio or an alloy, a solid solution, or an intermetallic compound having the intended element ratio. In addition, raw materials in a powder form are usually mixed. By this, a mixed powder composed of raw materials is obtained. Incidentally, it is possible to control the intensity ratio (B/A) of the diffraction peak by adjusting the composition ratio of silicon (Si) and tin (Sn) in the raw materials. For example, it is possible to increase the intensity ratio (B/A) by increasing the composition ratio of Sn to Si.

Subsequently, the mixed powder obtained above is subjected to an alloying treatment. By this, a silicon-containing alloy that can be used as a negative electrode active material for a lithium ion secondary battery is obtained.

As a method of alloying treatment, there are a solid phase method, a liquid phase method, and a vapor phase method, but examples thereof may include a mechanical alloying method, an arc plasma melting method, a casting method, a gas atomizing method, a liquid quenching method, an ion beam sputtering method, a vacuum deposition method, a plating method, and a vapor phase chemical reaction method. Among them, it is preferable to conduct the alloying treatment by using the mechanical alloying method. It is preferable to conduct the alloying treatment by using the mechanical alloying method since it is possible to easily control the state of the phase. In addition, a step of melting the raw materials or a step of quenching and solidifying the molten material thus molten may be included before the alloying treatment.

In the production method according to the present embodiment, the alloying treatment described above is preferably conducted for 12 hours or longer and more preferably for 24 hours or longer. This makes it possible to form a structure composed of a parent phase and a silicide phase as described above. A negative electrode active material (silicon-containing alloy) capable of exerting desired cycle durability can be obtained particularly when the time for the alloying treatment is 24 hours or longer. Incidentally, the time for the alloying treatment is preferably 30 hours or longer, more preferably 36 hours or longer, still more preferably 42 hours or longer, and particularly preferably 48 hours or longer. The degree of being amorphous of Si and Sn increases and the intensity ratio (B/A) of the diffraction peaks converges to around 1.5 as the time for the alloying treatment is increased as described above. Incidentally, the upper limit value of the time for the alloying treatment is not particularly limited, but it may be usually 72 hours or shorter.

The alloying treatment by the method described above is usually conducted in a dry atmosphere, but the particle size distribution after the alloying treatment has a wide width from a small size to a large size in some cases. For this reason, it is preferable to conduct a crushing treatment and/or classification treatment to adjust the particle size.

The predetermined alloy to be essentially contained in the negative electrode active material layer has been described above, but the negative electrode active material layer may contain other negative electrode active materials. Examples of the negative electrode active material other than the predetermined alloy may include carbon such as natural graphite, artificial graphite, carbon black, activated carbon, carbon fiber, coke, soft carbon, and hard carbon, a pure metal such as Si or Sn, or an alloy-based active material having a composition ratio which deviates from the predetermined composition ratio described above, or a metal oxide such as TiO, $Ti_2O_3$, or $TiO_2$ or $SiO_2$, SiO, or $SnO_2$, a composite oxide of lithium and a transition metal such as $Li_{4/3}Ti_{5/3}O_4$ or $Li_7MnN$, Li-Pb alloy, Li-Al alloy, or Li. However, from the viewpoint of sufficiently exerting the action and effect obtained by using the predetermined alloy as the negative electrode active material, the content of the predetermined alloy in 100% by mass of the total amount of the negative electrode active material is preferably from 50 to 100% by mass, more preferably from 80 to 100% by mass, still more preferably from 90 to 100% by mass, particularly preferably from 95 to 100% by mass, and most preferably 100% by mass.

Subsequently, the negative electrode active material layer 13 contains a binder.

(Binder)

The binder is added for the purpose of binding the active materials with each other or the active material with the current collector and thus maintaining the electrode structure. The kind of the binder to be used in the negative electrode active material layer is also not particularly limited, and those described above as the binder to be used in the positive electrode active material layer can be used in the same manner. Hence, the detailed description thereon will be omitted here.

Incidentally, the amount of the binder contained in the negative electrode active material layer is not particularly limited as long as it is an amount in which the active material can be bound, but it is preferably from 0.5 to 20% by mass and more preferably from 1 to 15% by mass relative to the negative electrode active material layer.

(Requirements Common to Positive Electrode and Negative Electrode Active Material Layers 15 and 13)

The requirements common to the positive electrode and negative electrode active material layers 15 and 13 will be described below.

The positive electrode active material layer 15 and the negative electrode active material layer 13 contain an electric conductive auxiliary, an electrolyte salt (lithium salt), an ion conductive polymer, and the like if necessary. In particular, the negative electrode active material layer 13 essentially contains an electric conductive auxiliary as well.

(Electric Conductive Auxiliary)

The electric conductive auxiliary is an additive to be blended in order to improve the electric conductivity of the positive electrode active material layer or the negative electrode active material layer. Examples of the electric conductive auxiliary may include carbon materials such as carbon black such as acetylene black, graphite, and vapor-grown carbon fiber. An electronic network which can contribute to improvement of output characteristics of the battery is effectively formed in the interior of the active material layer when the active material layer contains an electric conductive auxiliary.

The content of the electric conductive auxiliary to be mixed in the active material layer is in a range of 1% by mass or more, more preferably 3% by mass or more, and still more preferably 5% by mass or more with respect to the total amount of the active material layer. In addition, the content of the electric conductive auxiliary to be mixed in the active material layer is in a range of preferably 15% by mass or less, more preferably 10% by mass or less, still more preferably 7% by mass or less with respect to the total amount of the active material layer. The electron conductivity of the active material itself is low, the electrode resistance can be decreased by the amount of the electric conductive auxiliary, and the following effects are exerted by regulating the blending ratio (content) of the electric conductive auxiliary in the active material layer to be in the above range. That is, it is possible to sufficiently ensure the electron conductivity without hindering the electrode reaction, to suppress a decrease in energy density due to a decrease in electrode density, and thus to attain the improvement in energy density due to the improvement in electrode density.

In addition, an electric conductive binder having the functions of both the electric conductive auxiliary and the binder may be used instead of these electric conductive auxiliary and binder or may be concurrently used with one or both of these electric conductive auxiliary and binder. As the electric conductive binder, commercially available TAB-2 (manufactured by Hohsen Corp.) can be used.

Electrolyte Salt (Lithium Salt)

Examples of the electrolyte salt (lithium salt) may include $Li(C_2F_5SO_2)_2N$, $LiPF_6$, $LiBF_4$, $LiClO_4$, $LiAsF_6$, and $LiCF_3SO_3$.

Ion Conductive Polymer

Examples of the ion conductive polymer may include a polyethylene oxide-based (PEO) polymer and a polypropylene oxide-based (PPO) polymer.

The blending ratio of the components contained in the positive electrode active material layer and the negative electrode active material layer is not particularly limited. The blending ratio can be adjusted by appropriately referring to known knowledge on nonaqueous solvent secondary batteries.

The thickness of each active material layer (the active material layer on one side of the current collector) is also not particularly limited, and conventionally known knowledge on batteries can be appropriately referred to. As an example, the thickness of each active material layer is usually about from 1 to 500 $\mu$m and preferably from 2 to 100 $\mu$m in consideration of the intended use (output-oriented, energy-oriented, or the like) of the battery and ion conductivity.

<Current Collector>

The current collectors 11 and 12 are composed of an electric conductive material. The size of the current collector is determined according to the application of the battery. For example, a current collector having a large area is used when the current collector is used in a large battery requiring a high-energy density.

The thickness of the current collector is also not particularly limited. The thickness of the current collector is usually about from 1 to 100 $\mu$m.

The shape of the current collector is also not particularly limited. In the stacked type battery 10 illustrated in Fig. 1, a mesh shape (expanded grid or the like) or the like can be used in addition to the current collector foil.

Incidentally, it is desirable to use a current collecting foil in the case of directly forming a thin film alloy of the negative electrode active material on the negative electrode current collector 11 by a sputtering method or the like.

The material constituting the current collector is not particularly limited. For example, a metal or a resin in which an electric conductive filler is added to an electric conductive polymer material or an electric nonconductive polymer material can be employed.

Specifically, examples of the metal may include aluminum, nickel, iron, stainless steel, titanium, and copper. In addition to these, a clad material of nickel with aluminum, a clad material of copper with aluminum, a plated material of a combination of these metals, or the like can be preferably used. In addition, it may be a foil fabricated by covering aluminum on a metal surface. Among them, aluminum, stainless steel, copper, and nickel are preferable from the viewpoints of electron conductivity, action potential of battery, adhesive property of the negative electrode active material to the current collector by sputtering, and the like.

In addition, examples of the electric conductive polymer material may include polyaniline, polypyrrole, polythiophene, polyacetylene, polyparaphenylene, polyphenylenevinylene, polyacrylonitrile, and polyoxadiazole. Since such an electric conductive polymer material exhibits sufficient electric conductivity even without adding an electric conductive filler thereto and it is thus advantageous from the viewpoint of facilitating the production process or decreasing the weight of the current collector.

Examples of the electric nonconductive polymer material may include polyethylene (PE; high density polyethylene (HDPE), low density polyethylene (LDPE), and the like), polypropylene (PP), polyethylene terephthalate (PET), polyether nitrile (PEN), polyimide (PI), polyamide-imide (PAI), polyamide (PA), polytetrafluoroethylene (PTFE), styrene-butadiene rubber (SBR), polyacrylonitrile (PAN), polymethyl acrylate (PMA), polymethyl methacrylate (PMMA), polyvinyl chloride (PVC), polyvinylidene fluoride (PVdF), or polystyrene (PS). Such an electric nonconductive polymer material can exhibit excellent electric potential resistance or solvent resistance.

An electric conductive filler may be added to the electric conductive polymer material or electric nonconductive polymer material described above if necessary. An electric conductive filler is necessarily essential in order to impart electric conductivity to the resin particularly in a case in which the resin to be the base material of the current collector is composed only of an electric nonconductive polymer.

The electric conductive filler can be used without being particularly limited as long as it is a substance exhibiting electric conductivity. Examples of a material exhibiting excellent electric conductivity, electric potential resistance, or lithium ion shielding property may include metal and electric conductive carbon. The metal is not particularly limited, but it is preferable to contain at least one kind of metal selected from the group consisting of Ni, Ti, Al, Cu, Pt, Fe, Cr, Sn, Zn, In, Sb, and K or an alloy or metal oxide containing these metals. In addition, the electric conductive carbon is not particularly limited. It is preferably one that contains at least one kind selected from the group consisting of acetylene black, vulcan, black pearl, carbon nanofiber, Ketjen black, carbon nanotube, carbon nanohorn, carbon nanoballoon, and fullerene.

The amount of the electric conductive filler added is not particularly limited as long as it is an amount in which sufficient electric conductivity can be imparted to the current collector, and it is generally about from 5 to 35% by mass.

<Electrolyte Layer>

As the electrolyte constituting the electrolyte layer 17, a liquid electrolyte or a polymer electrolyte can be used.

The liquid electrolyte has a form in which a lithium salt (electrolyte salt) is dissolved in an organic solvent. Examples of the organic solvent may include carbonates such as ethylene carbonate (EC), propylene carbonate (PC), butylene carbonate (BC), vinylene carbonate (VC), dimethyl carbonate (DMC), diethyl carbonate (DEC), ethyl methyl carbonate (EMC), and methyl propyl carbonate (MPC).

In addition, as the lithium salt, it is possible to employ a compound that can be added to the active material layer of an electrode such as $Li(CF_3SO_2)_2N$, $Li(C_2F_5SO_2)_2N$, $LiPF_6$, $LiBF_4$, $LiAsF_6$, $LiTaF_6$, $LiClO_4$, or $LiCF_3SO_3$.

Meanwhile, the polymer electrolyte is classified into a gel electrolyte containing an electrolytic solution and an intrinsic polymer electrolyte which does not contain an electrolytic solution.

The gel electrolyte has a configuration in which the liquid electrolyte (electrolytic solution) is injected into a matrix polymer composed of an ion conductive polymer. It is excellent to use a gel polymer electrolyte as the electrolyte from the viewpoint that the fluidity of the electrolyte is eliminated and ionic conduction between the respective layers is easily shielded.

Examples of the ion conductive polymer to be used as the matrix polymer may include polyethylene oxide (PEO), polypropylene oxide (PPO), and a copolymer thereof. Such a polyalkylene oxide-based polymer can readily dissolve an electrolyte salt such as a lithium salt.

The proportion of the liquid electrolyte (electrolytic solution) in the gel electrolyte is not particularly limited, but it is preferably set to about several percent by mass to 98% by mass from the viewpoint of ionic conductivity and the like. In the present embodiment, there is an effect particularly for a gel electrolyte containing a large amount of electrolytic solution, namely, having a proportion of the electrolytic solution of 70% by mass or more.

Incidentally, a separator may be used in the electrolyte layer in a case in which the electrolyte layer is composed of a liquid electrolyte, a gel electrolyte, or an intrinsic polymer electrolyte. Examples of the specific form of the separator (including a nonwoven fabric) may include a microporous membrane formed of a polyolefin such as polyethylene or polypropylene, a porous flat plate, or a nonwoven fabric.

The intrinsic polymer electrolyte has a configuration in which a supporting salt (lithium salt) is dissolved in the matrix polymer described above, and it does not contain an organic solvent as a plasticizer. Hence, liquid leakage from the battery is not concerned and the reliability of the battery can be improved in a case in which the electrolyte layer is composed of the intrinsic polymer electrolyte.

A matrix polymer of the gel electrolyte or the intrinsic polymer electrolyte can exert excellent mechanical strength by forming a crosslinked structure. In order to form a crosslinked structure, a polymerizable polymer (for example, PEO or PPO) for forming a polymer electrolyte may be subjected to a polymerization treatment such as heat polymerization, ultraviolet polymerization, radiation polymerization, or electron beam polymerization using a proper polymerization initiator.

<Current Collecting Plate and Lead>

A current collecting plate may be used for the purpose of taking out the electric current to the outside of the battery. The current collecting plate is electrically connected to the current collector and the lead and brought out to the outside of the laminate sheet of the battery outer packaging material.

The material constituting the current collecting plate is not particularly limited and a known highly electric conductive material which is conventionally used as a current collecting plate for lithium ion secondary battery can be used. As the material constituting the current collecting plate, for example, metal materials such as aluminum, copper, titanium, nickel, stainless steel (SUS), and any alloy thereof are preferable, and aluminum, copper, and the like are more preferable from the viewpoint of light weight, corrosion resistance, and high electric conductivity. Incidentally, the same material or different materials may be used in the positive electrode current collecting plate and the negative electrode current collecting plate.

A positive terminal lead and a negative terminal lead are used if necessary. As a material for the positive electrode terminal lead and the negative electrode terminal lead, a known terminal lead that is used in a lithium ion secondary battery can be used. Incidentally, it is preferable that the portion to be brought out from a battery outer packaging material 29 be covered with a heat-shrinkable tube or the like exhibiting heat resistance and insulation property so as not to affect the products (for example, automotive parts and especially electronic devices) by coming in contact with peripheral devices, wires, and the like and thus causing a short circuit.

<Battery Outer Packaging Material>

As the battery outer packaging material 29, it is possible to use a bag-shaped case which can cover the power generating element and uses a laminate film containing aluminum in addition to a known metal can case. As the laminate film, for example, a laminate film having a three-layer structure formed by laminating PP, aluminum, and nylon in this order, or the like can be used, but the laminate film is not limited to these. A laminate film is preferable from the viewpoint of having a high output and cooling performance and being able to be suitably utilized in a battery for large device for EV and HEV.

Incidentally, the lithium ion secondary battery can be produced by a conventionally known production method.

<Configuration of Appearance of Lithium Ion Secondary Battery>

Fig. 2 is a perspective view which illustrates the appearance of a stacked type flat lithium ion secondary battery.

As illustrated in Fig. 2, a stacked type flat lithium ion secondary battery 50 has a rectangular flat shape, and a positive electrode current collecting plate 59 and a negative electrode current collecting plate 58 for taking out electric power are pulled out from both side portions thereof. A power generating element 57 is wrapped in a battery outer packaging material 52 of the lithium ion secondary battery 50, the periphery of the battery outer packaging material 52 is heat-sealed, and the power generating element 57 is hermetically sealed in a state in which the positive electrode current collecting plate 59 and the negative electrode current collecting plate 58 are pulled out to the outside. Here, the power generating element 57 corresponds to the power generating element 21 of the lithium ion secondary battery (stacked type battery) 10 illustrated in Fig. 1. The power generating element 57 is formed by stacking a plurality of single battery layers (single cells) 19 including the positive electrode (positive electrode active material layer) 13, the electrolyte layer 17, and the negative electrode (negative electrode active material layer) 15.

Incidentally, the lithium ion secondary battery is not limited to a stacked type one having a flat shape (laminate cell). The lithium ion secondary battery may be one having a cylindrical shape (coin cell) or one having a prismatic shape (square cell) as a wound type lithium ion battery, one obtained by deforming the one having a cylindrical shape to have a rectangular flat shape, and further a cylindrical cell, and it is not particularly limited. In one having a cylindrical or prismatic shape, a laminate film or a conventional cylindrical can (metal can) may be used as the outer packaging material thereof, and the outer packaging material is not particularly limited. Preferably, the power generating element is packaged in an aluminum laminate film. The weight saving can be achieved by this form.

In addition, bringing out of the positive electrode current collecting plate 59 and the negative electrode current collecting plate 58 illustrated in Fig. 2 is not also particularly limited. The positive electrode current collecting plate 59 and the negative electrode current collecting plate 58 may be pulled out from the same side or each of the positive electrode current collecting plate 59 and the negative electrode current collecting plate 58 may be divided into a plurality of pieces and taken out from each side, and the bringing out is not limited to that illustrated in Fig. 2. In addition, in a wound type lithium ion battery, terminals may be formed by utilizing, for example, a cylindrical can (metal can) instead of a current collecting plate.

As described above, according to the negative electrode active material for a lithium ion secondary battery of the present embodiment, it is possible to improve cycle durability of the lithium ion secondary battery. Therefore, the negative electrode and the lithium ion secondary battery which are formed by using the negative electrode material can be suitably utilized as a large capacity power source for electric vehicles, hybrid electric vehicles, fuel cell vehicles, hybrid fuel cell vehicles, and the like. That is, they can be suitably utilized in a vehicle driving power source and an auxiliary power source which are required to have a high-volume energy density and a high-volume output density over a long term.

Examples

The invention will be described in more detail with reference to the following Examples. However, the technical scope of the present invention is not limited to only the following Examples.

(Reference Example 1)

[Production of Silicon-Containing Alloy]

A silicon-containing alloy ($Si_{59}Sn_{22}Ti_{19}$) (unit: % by mass, the same applies hereinafter) was produced by a mechanical alloying method. Specifically, by using a planetary ball mill apparatus P-6 manufactured by Fritsch GmbH, zirconia crushing balls and raw material powders of the alloy were put in a zirconia crushing pot, alloyed at 600 rpm for 25 hours (alloying treatment), and then subjected to a crushing treatment at 400 rpm for 1 hour. Incidentally, the average particle diameter of the silicon-containing alloy (negative electrode active material) powder thus obtained was 0.3 $\mu$m.

[Fabrication of Negative Electrode]

Mixed were 80 parts by mass of the silicon-containing alloy ($Si_{59}Sn_{22}Ti_{19}$) thus produced as the negative electrode active material, 5 parts by mass of acetylene black as an electric conductive auxiliary, and 15 parts by mass of polyimide as a binder, the mixture thus obtained was dispersed in N-methylpyrrolidone to obtain a negative electrode slurry. Subsequently, the negative electrode slurry thus obtained was uniformly coated on both sides of a negative electrode current collector formed of a copper foil such that the thickness of each of the negative electrode active material layer was 30 $\mu$m, and dried in a vacuum for 24 hours, thereby obtaining a negative electrode.

[Fabrication of Lithium Ion Secondary Battery (Coin Cell)]

The negative electrode thus fabricated and the counter electrode Li were allowed to face each other, and a separator (Polyolefin, film thickness: 20 $\mu$m) was disposed therebetween. Subsequently, the stacked body of the negative electrode, the separator, and the counter electrode Li was disposed on the bottom side of a coin cell (CR 2032, material: stainless steel (SUS 316)). Furthermore, a gasket was fitted to maintain the insulation between the positive electrode and the negative electrode, the following electrolytic solution was injected by using a syringe, a spring and a spacer were stacked thereon, the upper side of the coin cell was superimposed thereon, and caulking was conducted to hermetically seal the coin cell, thereby obtaining a lithium ion secondary battery.
Incidentally, as the electrolytic solution, a solution prepared by dissolving lithium hexafluorophosphate ($LiPF_6$) as a lithium salt in an organic solvent in which ethylene carbonate (EC) and diethyl carbonate (DEC) were mixed at a proportion of EC : DEC = 1:2 (volume ratio) at a concentration of 1 mol/L was used.

(Reference Example 2)

A negative electrode active material, a negative electrode, and a lithium ion secondary battery (coin cell) were prepared by the same method as in Reference Example 1 described above except that the composition of the silicon-containing alloy was changed to $Si_{40}Sn_{40}Ti_{20}$ and the time for the alloying treatment was changed to 24 hours. Incidentally, the average particle diameter of the silicon-containing alloy (negative electrode active material) powder thus obtained was 0.3 $\mu$m.

(Reference Example 3)

A negative electrode active material, a negative electrode, and a lithium ion secondary battery (coin cell) were prepared by the same method as in Reference Example 2 described above except that the composition of the silicon-containing alloy was changed to $Si_{70}Sn_{15}Al_{15}$. Incidentally, the average particle diameter of the silicon-containing alloy (negative electrode active material) powder thus obtained was 0.3 $\mu$m.

(Reference Example 4)

A negative electrode active material, a negative electrode, and a lithium ion secondary battery (coin cell) were prepared by the same method as in Reference Example 2 described above except that the composition of the silicon-containing alloy was changed to $Si_{60}Sn_{20}Al_{20}$. Incidentally, the average particle diameter of the silicon-containing alloy (negative electrode active material) powder thus obtained was 0.3 $\mu$m.

(Example 5)

A negative electrode active material, a negative electrode, and a lithium ion secondary battery (coin cell) were prepared by the same method as in Reference Example 2 described above except that the composition of the silicon-containing alloy was changed to $Si_{50}Sn_{10}Ti_{40}$. Incidentally, the average particle diameter of the silicon-containing alloy (negative electrode active material) powder thus obtained was 0.3 $\mu$m.

(Example 6)

A negative electrode active material, a negative electrode, and a lithium ion secondary battery (coin cell) were prepared by the same method as in Reference Example 2 described above except that the composition of the silicon-containing alloy was changed to $Si_{50}Sn_{20}Ti_{30}$. Incidentally, the average particle diameter of the silicon-containing alloy (negative electrode active material) powder thus obtained was 0.3 $\mu$m.

(Reference Example 7)

A negative electrode active material, a negative electrode, and a lithium ion secondary battery (coin cell) were prepared by the same method as in Reference Example 2 described above except that the composition of the silicon-containing alloy was changed to $Si_{50}Sn_{30}Ti_{20}$. Incidentally, the average particle diameter of the silicon-containing alloy (negative electrode active material) powder thus obtained was 0.3 $\mu$m.

(Reference Example 8)

A negative electrode active material, a negative electrode, and a lithium ion secondary battery (coin cell) were prepared by the same method as in Reference Example 2 described above except that the composition of the silicon-containing alloy was changed to $Si_{50}Sn_{40}Ti_{10}$. Incidentally, the average particle diameter of the silicon-containing alloy (negative electrode active material) powder thus obtained was 0.3 $\mu$m.

(Comparative Example 1)

A negative electrode active material, a negative electrode, and a lithium ion secondary battery (coin cell) were prepared by the same method as in Reference Example 2 described above except that the composition of the silicon-containing alloy was changed to $Si_{80}Ti_{20}$. Incidentally, the average particle diameter of the silicon-containing alloy (negative electrode active material) powder thus obtained was 0.3 $\mu$m.

(Comparative Example 2)

A negative electrode active material, a negative electrode, and a lithium ion secondary battery (coin cell) were prepared by the same method as in Reference Example 2 described above except that the composition of the silicon-containing alloy was changed to $Si_{70}Al_{30}$. Incidentally, the average particle diameter of the silicon-containing alloy (negative electrode active material) powder thus obtained was 0.3 $\mu$m.

(Comparative Example 3)

A negative electrode active material, a negative electrode, and a lithium ion secondary battery (coin cell) were prepared by the same method as in Reference Example 2 described above except that the composition of the silicon-containing alloy was changed to $Si_{50}Ti_{50}$. Incidentally, the average particle diameter of the silicon-containing alloy (negative electrode active material) powder thus obtained was 0.3 $\mu$m.

[Analysis of Textural Structure of Negative Electrode Active Material]

The textural structure of the negative electrode active material (silicon-containing alloy) fabricated in each of Reference Examples 1 to 4, 7 and 8, Examples 5 and 6, and Comparative Examples 1 and 3 was analyzed by the electron diffraction method, as a result, diffraction spots and halo patterns indicating the crystallinity of the silicide phase were observed in any of Reference Examples 1 to 4, 7 and 8, Examples 5 and 6 and Comparative Examples 1 and 3, and it was confirmed that the negative electrode active materials had a textural structure in which a crystalline silicide phase was dispersed in the amorphous Si phase of the parent phase.
In addition, the crystalline structure of the negative electrode active material (silicon-containing alloy) prepared in each of Examples 5 and 6, Reference Examples 1 to 4, 7 and 8 and Comparative Examples 1 to 3 was analyzed by the X-ray diffraction measurement method. The apparatus and conditions used in the X-ray diffraction measurement method are as follows.

Name of apparatus: X-ray diffractometer (SmartLab 9 kW) manufactured by Rigaku Corporation
Voltage and current: 45 kV and 200 mA
X-ray wavelength: CuK$\alpha$1.

Here, the value of the diffraction peak intensity A of the (111) plane of Si, the value of the diffraction peak intensity B of the (001) plane of Sn, and the ratio value (B/A) of these values which have been obtained from the X-ray diffraction spectrum acquired for each of the negative electrode active materials (silicon-containing alloys) of Examples 5 and 6, Reference Examples 1 to 4, 7 and 8 and Comparative Examples 1 to 3 are presented in the following Table 1. Here, the diffraction peak of the (111) plane of Si is present in a range of $2\theta$ = 24 to 33° and the diffraction peak of the (001) plane of Sn is present in a range of $2\theta$ = 26 to 35°. Incidentally, it has also been confirmed that the entire transition metal element (Ti) contained in the silicon-containing alloy is present as a silicide ($TiSi_2$) phase by this X-ray diffraction analysis.

In addition, the full width at half maximum (FWHM) of the diffraction peak of the (001) plane of Sn in a range of $2\theta$ = 26 to 35° determined from the X-ray diffraction spectrum thus obtained is presented in Table 1.

[Evaluation of Cycle Durability]

The cycle durability of each lithium ion secondary battery (coin cell) fabricated in as above was evaluated under the following charge and discharge test conditions.

(Charge and Discharge Test Conditions)

1) Charge and Discharge Tester: HJ 0501 SM8A (manufactured by HOKUTO DENKO CORP.)
2) Charge and discharge conditions [Charge process] 0.3 C, 2 V → 10 mV (constant current and constant voltage mode) [Discharge process] 0.3 C, 10 mV → 2 V (constant current mode)
3) Thermostatic chamber: PFU-3K (manufactured by ESPEC CORP.)
4) Evaluation temperature: 300 K (27°C).

The evaluation cell was charged from 2 V to 10 mV at 0.1 mA in a constant current and constant voltage mode in a thermostatic chamber set at the above evaluation temperature by using a charge and discharge tester in the charge process (referred to as the process of intercalating Li into the evaluation electrode) . Thereafter, the evaluation cell (coin cell) was discharged from 10 mV to 2 V at 0.3 C in a constant current mode in the discharge process (referred to as the process of deintercalating Li from the evaluation electrode) . The charge and discharge cycle described above was taken as one cycle, and charge and discharge test was conducted from the initial cycle (1st cycle) to the 50th cycle under the same charge and discharge conditions. Thereafter, the result for the proportion (discharge capacity retention rate [%]) of the discharge capacity in the 50th cycle to the discharge capacity in the 1st cycle is presented in the following Table 1.

[Table 1]

| | Negative electrode active material | Time for alloying treatment (h) | Peak intensity A of Si (cps) | Peak intensity B of Sn (cps) | Peak intensity ratio B/A | FWHM of Sn peak (°) | Position of Sn peak (°) | Discharge capacity retention rate after 50 cycles (%) |
|---|---|---|---|---|---|---|---|---|
| Reference Example 1 | $Si_{59}Sn_{22}Ti_{19}$ | 25 | 35433 | 31814 | 0.90 | 0.40 | 30.40 | 75.7 |
| Reference Example 2 | $Si_{40}Sn_{40}Ti_{20}$ | 24 | 46009 | 120005 | 2.61 | 0.28 | 30.78 | 61.4 |
| Reference Example 3 | $Si_{70}Sn_{15}Al_{15}$ | 24 | 115255 | 39678 | 0.34 | 0.54 | 30.68 | 26.4 |
| Reference Example 4 | $Si_{60}Sn_{20}Al_{20}$ | 24 | 105202 | 50951 | 0.48 | 0.68 | 30.68 | 34.0 |
| Example 5 | $Si_{50}Sn_{10}Ti_{40}$ | 24 | 20844 | 21678 | 1.04 | 0.75 | 30.30 | 92.9 |
| Example 6 | $Si_{50}Sn_{20}Ti_{30}$ | 24 | 33456 | 30740 | 0 . 92 | 0.60 | 30.70 | 85.1 |
| Reference Example 7 | $Si_{50}Sn_{30}Ti_{20}$ | 24 | 34592 | 74748 | 2.16 | 0.46 | 30.70 | 62.8 |
| Reference Example 8 | $Si_{50}Sn_{40}Ti_{10}$ | 24 | 35357 | 130000 | 3.68 | 0.38 | 30.68 | 18.7 |
| Comparative Example 1 | $Si_{80}Ti_{20}$ | 24 | - | 0 | 0 | - | - | 16.6 |
| Comparative Example 2 | $Si_{70}Al_{30}$ | 24 | - | 0 | 0 | - | - | 18.4 |
| Comparative Example 3 | $Si_{50}Ti_{50}$ | 24 | - | 0 | 0 | - | - | 15.0 |

EP 3 236 518 B1

From the results presented in Table 1, it can be seen that the discharge capacity retention rate after 50 cycles is maintained at a high value and excellent cycle durability is exhibited in the lithium ion batteries using the negative electrode active materials according to the present invention.

| 10 and 50 | Lithium ion secondary battery (stacked type battery) |
| 11 | Negative electrode current collector |
| 12 | Positive electrode current collector |
| 13 | Negative electrode active material layer |
| 15 | Positive electrode active material layer |
| 17 | Electrolyte layer |
| 19 | Single battery layer |
| 21 and 57 | Power generating element |
| 25 and 58 | Negative electrode current collecting plate |
| 27 and 59 | Positive electrode current collecting plate |
| 29 and 52 | Battery outer packaging material (laminate film) |

**Claims**

1. A negative electrode active material for lithium ion secondary battery comprising a silicon-containing alloy having a composition represented by the following Chemical Formula (1)
   [Chemical Formula 1]

   $$Si_xSn_yM_zA_a \qquad (1),$$

   wherein in Chemical Formula (1) above, A is an unavoidable impurity,

   M is titanium (Ti),
   x, y, z, and a represent values in terms of percent by mass, and
   $0 < x < 100$, $0 < y < 100$, $7 < z < 100$, and $0 \leq a < 0.5$ and $x + y + z + a = 100$;
   wherein a ratio value (B/A) of a diffraction peak intensity B of a (001) plane of Sn in a range of $2\theta = 26$ to $35°$ to a diffraction peak intensity A of a (111) plane of Si in a range of $2\theta = 24$ to $33°$ is 0.3 or more and 3.7 or less in an X-ray diffraction measurement of the silicon-containing alloy using a CuK$\alpha$1 ray, the diffraction peak intensities A and B being determined according to the description;
   wherein a full width at half maximum of a diffraction peak of a (001) plane of Sn in a range of $2\theta = 26$ to $35°$ is 0.6° or greater in an X-ray diffraction measurement of the silicon-containing alloy using a CuK$\alpha$1 ray, the full width at half maximum being determined according to the description; and
   wherein the silicon-containing alloy has a structure comprising a parent phase containing amorphous or low crystalline silicon as a main component and a silicide phase containing a silicide of titanium (Ti), the silicide phase being dispersed in the parent phase, wherein tin (Sn) is dispersed in silicon (Si) of the parent phase.

2. The negative electrode active material for lithium ion secondary battery according to claim 1, wherein B/A is 0.4 or more and 2.7 or less.

3. The negative electrode active material for lithium ion secondary battery according to claim 2, wherein B/A is 0.9 or more and 2.7 or less.

4. The negative electrode active material for lithium ion secondary battery according to claim 3, wherein B/A is 0.9 or more and 2.2 or less.

5. A negative electrode for lithium ion secondary battery comprising the negative electrode active material for lithium ion secondary battery set forth in any one of claims 1 to 4.

6. A lithium ion secondary battery comprising the negative electrode for lithium ion secondary battery set forth in claim 5.

**Patentansprüche**

1. Negativelektrodenaktivmaterial für eine Lithiumionensekundärbatterie, umfassend eine Silizium enthaltende Legierung mit einer Zusammensetzung der folgenden chemischen Formel (1)

   [Chemische Formel 1]

$$Si_xSn_yM_zA_a \qquad (1),$$

   worin in der obigen chemischen Formel (1) A eine unvermeidbare Verunreinigung ist, M Titan (Ti) ist,
   x, y, z und a Werte in Massenprozent darstellen, und
   $0 < x < 100$, $0 < y < 100$, $7 < z < 100$ und $0 \leq a < 0,5$ sowie $x + y + z + a = 100$;
   wobei das Verhältnis (B/A) einer Beugungspeakintensität B einer (001)-Ebene von Sn in einem Bereich von $2\theta$ = 26 bis 35° zu einer Beugungspeakintensität A einer (111)-Ebene von Si in einem Bereich von $2\theta$ = 24 bis 33° bei einer Röntgenbeugungsmessung der siliciumhaltigen Legierung unter Verwendung einer CuK$\alpha$1-Strahlung 0,3 oder mehr und 3,7 oder weniger beträgt, wobei die Beugungspeakintensitäten A und B gemäß der Beschreibung bestimmt werden;
   wobei eine Halbwertsbreite eines Beugungspeaks einer (001)-Ebene von Sn in einem Bereich von $2\theta$ = 26 bis 35° bei einer Röntgenbeugungsmessung der siliciumhaltigen Legierung unter Verwendung einer CuK$\alpha$1-Strahlung 0,6° oder mehr beträgt, wobei die Halbwertsbreite gemäß der Beschreibung bestimmt wird; und
   wobei die siliciumhaltige Legierung eine Struktur aufweist, die eine Grundphase umfasst, die amorphes oder niedrigkristallines Silicium als Hauptkomponente enthält, und eine Silicidphase, die ein Silicid von Titan (Ti) enthält, wobei die Silicidphase in der Grundphase dispergiert ist und wobei Zinn (Sn) im Silicium (Si) der Ausgangsphase dispergiert ist.

2. Negativelektrodenaktivmaterial für eine Lithiumionensekundärbatterie nach Anspruch 1, wobei B/A 0,4 oder mehr und 2,7 oder weniger beträgt.

3. Negativelektrodenaktivmaterial für eine Lithiumionensekundärbatterie nach Anspruch 2, wobei B/A 0,9 oder mehr und 2,7 oder weniger beträgt.

4. Negativelektrodenaktivmaterial für eine Lithiumionensekundärbatterie nach Anspruch 3, wobei B/A 0,9 oder mehr und 2,2 oder weniger beträgt.

5. Negative Elektrode für eine Lithiumionensekundärbatterie, umfassend das Negativelektrodenaktivmaterial für eine Lithiumionensekundärbatterie gemäß einem der Ansprüche 1 bis 4.

6. Lithiumionensekundärbatterie, umfassend die negative Elektrode für eine Lithiumionensekundärbatterie gemäß Anspruch 5.

**Revendications**

1. Matériau actif d'électrode négative pour batterie auxiliaire à ions lithium comprenant un alliage contenant du silicium ayant une composition représentée par la Formule Chimique (1) suivante

   [Formule Chimique 1]

$$Si_xSn_yM_zA_a \qquad (1),$$

   dans laquelle, dans la Formule Chimique (1) ci-dessus, A est une impureté inévitable,
   M est du titane (Ti),
   x, y, z, et a représentent des valeurs en termes de pourcentage en masse, et
   $0 < x < 100$, $0 < y < 100$, $7 < z < 100$ et $0 \leq a < 0,5$ et $x + y + z + a = 100$ ;
   dans lequel une valeur de rapport (B/A) entre une intensité de pic de diffraction B d'un plan (001) de Sn dans une plage de $2\theta$ = 26 à 35 ° et une intensité de pic de diffraction A d'un plan (111) de Si dans une plage de $2\theta$ = 24 à 33 ° est égale à 0,3 ou plus et 3,7 ou moins lors d'une mesure de diffraction aux rayons X de l'alliage contenant du silicium en utilisant un rayon de CuK$\alpha$1, les intensités de pic de diffraction A et B étant déterminées conformément à la description ;
   dans lequel une largeur totale à mi-hauteur d'un pic de diffraction d'un plan (001) de Sn dans une plage de $2\theta$

= 26 à 35 ° est égale ou supérieure à 0,6 ° lors d'une mesure de diffraction aux rayons X de l'alliage contenant du silicium en utilisant un rayon de CuKα1, la largeur totale à mi-hauteur étant déterminée conformément à la description ; et

dans lequel l'alliage contenant du silicium a une structure comprenant une phase parent contenant du silicium amorphe ou faiblement cristallin en tant que composant principal et une phase de siliciure contenant un siliciure de titane (Ti), la phase de siliciure étant dispersée dans la phase parent, dans lequel de l'étain (Sn) est dispersé dans du silicium (Si) de la phase parent.

2. Matériau actif d'électrode négative pour batterie auxiliaire à ions lithium selon la revendication 1, dans lequel B/A est égal à 0,4 ou plus et 2,7 ou moins.

3. Matériau actif d'électrode négative pour batterie auxiliaire à ions lithium selon la revendication 2, dans lequel B/A est égal à 0,9 ou plus et 2,7 ou moins.

4. Matériau actif d'électrode négative pour batterie auxiliaire à ions lithium selon la revendication 3, dans lequel B/A est égal à 0,9 ou plus et 2,2 ou moins.

5. Électrode négative pour batterie auxiliaire à ions lithium comprenant le matériau actif d'électrode négative pour batterie auxiliaire à ions lithium selon l'une quelconque des revendications 1 à 4.

6. Batterie auxiliaire à ions lithium comprenant l'électrode négative pour batterie auxiliaire à ions lithium selon la revendication 5.

EP 3 236 518 B1

FIGURE

FIG.1

22

FIG.2

50

58    57    59

52

FIG.3

FWHM

E

INTENSITY (cps)

A

C

BASE LINE

D

0

0    P    Q

2θ [ deg ]

**EP 3 236 518 B1**

**Patent documents cited in the description**

- WO 2006129415 A
- WO 2014199785 A1
- EP 2800176 A1
- WO 2012055948 A1
- US 20100270497 A1